# EUROPEAN PATENT APPLICATION

(11) **EP 2 407 354 A1**
(43) Date of publication of application: **18.01.2012**
(21) Application number: 10169239.0
(22) Date of filing: 12.07.2010
(51) Int. Cl.: B60S 5/04, B60C 23/00

(54) **Incentive-based method and system for reducing vehicle fuel consumption**

(71) Applicant: Vecht-Lifshitz, Susan Eve, 91451 Jerusalem (IL); Jammer, Daniel, 8808 Pfäffikon, Kanton Schwyz (CH)
(72) Inventor: Vecht-Lifshitz, Susan Eve, 91451 Jerusalem (IL); Jammer, Daniel, 8808 Pfäffikon, Kanton Schwyz (CH)
(74) Representative: Becker Kurig Straus

(57) **Abstract**

The present invention provides a computer-controlled tire pressure control system and method for reducing fuel consumption of a vehicle over a time period, the system including an air pump system including an air pump unit adapted to fill at least two tires concomitantly of the vehicle, at least one double ended conduit in fluid connection with the air pump unit, a frame for supporting the at least one double ended lead conduit around the vehicle and a computer in communication with the air pump unit and the vehicle for providing a user of the vehicle with real-time tire data of the vehicle over the time period.

## Description

### FIELD OF THE INVENTION

The present invention relates generally to methods for reducing fuel consumption, and more specifically to a system and method for reducing land vehicle fossil-based and electric fuel consumption.

### BACKGROUND OF THE INVENTION

There is growing concern that the Western world uses too much energy and is too energy-dependent on a small number of sometimes hostile, oil, gas and coal producing countries. However, the population distribution requires both public and private transportation systems.

In the US, there has been some legislation to reduce carbon emissions. Over 90% of carbon emissions from transport come from the private sector.

Current private transportation systems are largely based on cars, automobiles, vans, motorcycles and other vehicles. These vehicles are predominantly fuelled by gasoline, though some moves are being taken to introduce electric vehicles. In every country, there is inherent reduced fuel efficiency due, at least in part to some of the following:
a) increased aerodynamic drag (air resistance) due to vehicle design and roof racks and other additions;
b) loss in fuel efficiency due to under-inflated tires (0-10%);
c) loss in fuel efficiency due to incorrect calibration of air pressure pumps;
d) poor traffic flow control and congestion; and
e) poor training of drivers in fuel economy.

It would appear from the literature, that one might be able to make the following theoretical savings in fuel consumption as appears in Table 1.

**TABLE 1. THEORETICAL OPTIONS FOR PRIVATE VEHICLE FUEL CONSUMPTION**

| **NO.** | **METHODOLOGY** | **THEORETICAL SAVING OF TOTAL PRIVATE VEHICLE FUEL CONSUMPTION** |
|---|---|---|
| 1 | Improved calibration of air pressure pumps and gauges | 0.5-10% |
| 2 | Improved frequency and accuracy of tire air pressure inflation | 0.5-10% |
| 3 | Real-time optimized travel routes | 0.5-5% |
| 4 | Driver training | 0-26% |
| 5 | Chemical additives to improve fuel performance | unclear |

It is thus clear from Table 1, that a few simple steps could lead to significant improvement in fuel economy, reduced gas emissions and enormous financial savings.

The statistics in the US, show that around 30% of Americans fill their tires on a regular basis. In UK, a survey by the RAC, found that around half the male British drivers checked their tires at least once a month, but women drivers did not.

Some of the apparent reasons for the low frequency of checking are as follows:
1. not included in gas station services;
2. requirement to perform this by oneself;
3. time required to check and fill all four tires;
4. poor parking and lighting next to air pump;
5. accessibility to air pump, often only after fuel filling;
6. driver not wanting to dirty his/her hands;
7. driver not knowing correct pressure for tire and for current car load and ambient temperature; and
8. driver not knowing how to use the air pump.

Some attempts have been made to improve tire pressure, as are exemplified in the following patent publications:

US6441732 describes a system integrated to each of the tires mounted to a vehicle allows each of the tires to communicate with a mobile communicator, such as for example a mobile phone. The system includes at least sensors for monitoring and measuring the pressure and temperature of the tire. The measured parameters of the tire are fed to a processor that compensates the measured pressure with the measured temperature. The temperature corrected tire pressure is then stored in a memory store. A communications module, operating under a wireless data link protocol such as for example the Bluetooth protocol, sends the stored information to a mobile phone, in response to a request thereby. The temperature corrected data of the tire is also transmitted to the other tires of the vehicle. Any one of the tires may act as the server of all of the other tires for transmitting the information of the respective tires of the vehicle to the mobile phone, which acts as the browser. Alternatively, the mobile phone could request that information of the various tires be sent to it individually by the respective tires. In place of Bluetooth signals being transmitted from the tires, the tires may be equipped with radio frequency (RF) transceiver modules that transmit RF signals to a converter system, which converts the RF signals into Bluetooth signals, which are then broadcast to telecommunication devices adaptable to receive Bluetooth signals.

US7024318 discloses that in a tire pressure measurement system, there is a display indicating whether a tire (1) has an inadmissible or incorrect tire pressure and which tire (1) has inadequate tire pressure, is only activated when the driver stops to refuel. One or more sensors (6) are located near to the tank for this purpose and these identify a fuel stop.

US7331221 describes a method and apparatus to regulate the inflation of objects. To start inflation, the apparatus couples a fluid source to the object via a plenum. Concurrent with inflation, the apparatus substantially continuously measures pressure within the plenum using a sensor sufficiently proximate the object such that pressure measured by the sensor is substantially similar to pressure within the object. When measured pressure exceeds a target pressure by a prescribed margin, the apparatus stops inflating. While inflation is stopped, the apparatus reads pressure measured by the sensor and deflates the object as needed to reduce measured pressure to the target pressure.

US7624774 discloses a portable device for delivering nitrogen to multiple tires includes a gas source and supply line connected to a controller. The device also includes a gas delivery line comprising a manifold with a plurality of outlets in fluid communication with each other. A gas delivery line is operably connected to the controller and a plurality of extension lines with engagement chucks are operably connected to the outlets. The controller controls the supply of gas to the gas delivery line and controls a relief valve for venting the gas delivery line. The device also includes a sensor and a processor connected the controller and sensor which accepts user inputs. The controller, manifold and processor are affixed to a stand.

US2007279203A describes a tire monitoring system and associated. The tire monitoring system includes a plurality of tire sensor modules, employing contactless sensors, configured to transmit tire data at a predetermined time interval. The system also includes a central control unit that is configured to receive the tire data from the tire sensor modules, and is further configured with an external control unit that can communicate with the tire sensor modules, the central control units and outside sources.

US2009195373A describes an initiator system and method for a tire pressure monitoring system. The initiator system includes a service station through which the vehicle passes. While situated within the service station, an initiation signal is generated prompting data transmission from wheel unit based tire pressure monitoring device to a receiver. An output device may be employed to visually display information responsive to the transmitted data.

There is still a need to provide better pumps and tire measurement systems and methods.

### SUMMARY OF THE INVENTION

It is an object of some aspects of the present invention to provide improved tire monitoring and pumping system and methods.

In some embodiments of the present invention, improved methods and apparatus are provided for tire monitoring and inflation.

In other embodiments of the present invention, a method and system is described for providing warnings for low/high tire pressure and/or punctures.

In other embodiments of the present invention, a method and system is provided for increasing the safety of land vehicle transportation.

In additional embodiments for the present invention a business method is provided for saving fuel.

The first aspect of this invention is a user-friendly air pumping station comprising at least some of the following elements:
1) a weight load cell for checking the car weight in real time with current load;
2) a multiple lead pump, enabling filling of at least two tires simultaneously;
3) a frame for conveniently supporting leads of the multilead pump above and around a vehicle;
4) a barcode system and/or number plate reader connected to a server over a public network for checking car model and car history, adapted to provide data relating to the optimal front and rear tire pressures for the specific car model, load and atmospheric conditions; and
5) a call center/ online help for users.

There is thus provided according to an embodiment of the present invention, a computer-controlled tire pressure control system for reducing fuel consumption of a vehicle over a time period, the system including;
a) an air pump system including an air pump unit adapted to fill at least two tires concomitantly of the vehicle to a set pressure;
b) at least one double ended conduit in fluid connection with the air pump unit;
c) a frame for supporting the at least one double ended lead conduit around the vehicle; and
d) a computer in communication with the air pump unit and the vehicle for providing a user of the vehicle with real-time tire data of the vehicle.

Additionally, according to some embodiments of the present invention, the computer-controlled tire pressure control system further includes a load cell disposed under the frame.

Furthermore, according to some embodiments of the present invention, the load cell is adapted to provide real-time data relating to a weight of the vehicle to define the set pressure.

Moreover, according to some embodiments of the present invention, the air pump unit includes a display for displaying real time parameters of the at least two tires concomitantly.

Additionally, according to some embodiments of the present invention, the real time parameters are selected from the group consisting of a pressure parameter, a temperature parameter, a tread parameter and combinations thereof.

Further, according to some embodiments of the present invention, the at least one double-ended conduit includes a tire connection device at each end.

Yet further, according to some embodiments of the present invention, the at least one double-ended conduit includes a connector conduit for equalizing pressure in the at least two tires.

Additionally, according to some embodiments of the present invention, the connector conduit includes at least one remotely-operable valve.

According to some additional embodiments of the present invention, the at least one remotely-operable valve includes at least one one-way valve.

Additionally, according to some embodiments of the present invention, the at least one double-ended conduit includes two double-ended conduits.

According to some embodiments of the present invention, the computer-controlled tire pressure control system further includes a vehicle identifier apparatus including at least one of an optical eye and a bar-code reader.

According to some further embodiments of the present invention, the vehicle identifier apparatus is adapted to determine the set pressure in accordance with at least one of; a vehicle type, a vehicle real-time load; a tire temperature and vehicle historical data.

There is thus provided according to an embodiment of the present invention, a method for reducing fuel consumption of a vehicle, the method including;
a) providing a tire pressure monitoring and tire filling service to a vehicle over a time period;
b) sending at least one reminder to a user of the vehicle after a predetermined time interval in the time period; and
c) filling tires of the vehicle responsive to the tire pressure monitoring after the predetermined time interval thereby reducing a fuel efficiency loss of the vehicle.

Additionally, according to some embodiments of the present invention, fuel is selected from the group consisting of; fossil fuel, biodiesel, electric battery power, hydrogen fuel, solar energy, wind energy, hybrid fuels and combinations thereof.

Moreover, according to some embodiments of the present invention, the provision step and the filling tires step are performed at least, in part, by the computer-controlled air pump system as described herein.

Furthermore, according to some embodiments of the present invention, the filling tires step includes filling the at least two tires concomitantly within three minutes.

Additionally, according to some embodiments of the present invention, the filling tires step includes filling the at least two tires concomitantly within two minutes.

Further, according to some embodiments of the present invention, the filling tires step includes filling the at least two tires concomitantly within one minute.

Additionally, according to some embodiments of the present invention, the method further includes charging the user of the vehicle for the tire pressure monitoring and tire filling service.

Furthermore, according to some embodiments of the present invention, the method further includes providing compensation to a user of the vehicle for a low value of the fuel efficiency loss over the time period.

Further, according to some embodiments of the present invention, the method further includes providing compensation to a service provider of the tire pressure monitoring and tire filling service for the low value of the fuel efficiency loss of one or a number of vehicles over the time period.

Furthermore, according to some embodiments of the present invention, the method further includes providing compensation to a service provider of the tire pressure monitoring and tire filling service for carbon credits due to the low value of the fuel efficiency loss of one or a number of vehicles over the time period.

Furthermore, according to some embodiments of the present invention, the compensation to the service provider is at least one of; money, an account credit, at least one credit point, a club membership point, a prize, a compensation related to a carbon credit due to the low value of the fuel efficiency loss of the vehicle, and a compensation related to a carbon credit due to an average low value of fuel efficiency loss of a plurality of vehicles serviced by the service provider.

Additionally, according to some embodiments of the present invention, the method further includes providing compensation to a user of the vehicle for carbon credits due to the low value of the fuel efficiency loss of the vehicle over the time period.

Yet further, according to some embodiments of the present invention, the compensation to the user is at least one of; money, an account credit, at least one credit point, a club membership point, a prize, and a compensation related to a carbon credit due to the low value of the fuel efficiency loss.

Yet further, according to some embodiments of the present invention, the method further includes providing a fine to a user of the vehicle for a high value of the fuel efficiency loss over the time period.

The present invention will be more fully understood from the following detailed description of the preferred embodiments thereof, taken together with the drawings.

### BRIEF DESCRIPTION OF THE DRAWINGS

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Fig. 1A is a graph of loss of tire pressure over time;
Fig. 1B is a graph of increase in fuel consumption against reduced tire pressure;
Fig. 2 is a simplified pictorial illustration of a no-emission service station for reducing electric fuel consumption in electric vehicles, in accordance with an embodiment of the present invention;
Fig. 3A is a simplified pictorial illustration of an air pump system for pumping up tires, placed alongside a carwash apparatus, in accordance with an embodiment of the present invention;
Fig. 3B is another simplified pictorial illustration of an air pump system, in accordance with an embodiment of the present invention;
Fig. 4 is a simplified flow chart of a method for controlling tire pressure, in accordance with an embodiment of the present invention;
Figs. 5A-5C show theoretical loss in fuel efficiency over time for different frequencies of tire filling, in accordance with an embodiment of the present invention;
Fig. 6 is a simplified flow chart of a method for checking for a flat tire, in accordance with an embodiment of the present invention; and
Fig. 7 is a simplified flow chart of an incentive -based method for reducing fuel consumption, in accordance with an embodiment of the present invention;

In all the figures similar reference numerals identify similar parts.

### DETAILED DESCRIPTION OF PREFERRED EMBODIMENTS

In the detailed description, numerous specific details are set forth in order to provide a thorough understanding of the invention. However, it will be understood by those skilled in the art that these are specific embodiments and that the present invention may be practiced also in different ways that embody the characterizing features of the invention as described and claimed herein.

The terms "plurality" or "a plurality" as used herein include, for example, "multiple" or "two or more". For example, "a plurality of items" includes two or more items.

Although portions of the discussion herein relate, for demonstrative purposes, to wired links and/or wired communications, some embodiments are not limited in this regard, and may include one or more wired or wireless links, may utilize one or more components of wireless communication, may utilize one or more methods or protocols of wireless communication, or the like. Some embodiments may utilize wired communication and/or wireless communication.

The terms "program", "computer program" or "code" as used herein include, for example, a source code, a computer program, a code or program written in a high-level programming language, a code or program written in a very high-level programming language, a code or program written in a low-level programming language, an assembly code or program, a machine language code or program, a single-thread program, a multiple-thread program, a portion of a code or program, a segment of a code or program, one or more instructions or sets of instructions, one or more subroutines, one or more procedures, one or more functions, one or more libraries, a logic, an object-oriented code or program, a portable or non-portable code or program, a code or program that requires compilation by a compiler, an originally-written code or program, a non-optimized code or program, an optimized code or program, a non-modified program, a modified program, a debugged program, a non-debugged program, a pre-compilation program version, a post-compilation program version, a pre-optimization program version, a post-optimization program version, a pre-linking program version, a post-linking program version, a program that was modified manually by a programmer, a program that was modified automatically by a compiler and/or linker and/or debugger and/or optimizer, a program that was subject to one or more iterations of optimization, a program that was subject to one or more methods of optimization, or the like.

The term "process" or "method" as used herein includes, for example, a portion or an instance of a computer program that is being executed by a computing system, e.g., by a computing system able to concurrently execute multiple processes.

Although portions of the discussion herein may relate, for demonstrative purposes, to a first process and a second process that attempt to access a shared resource, some embodiments may be used in conjunction with other combinations of processes and/or threads, for example: more than two processes; a first process of a first program, and a second process of the first program; a first process of a first program, and a second process of a second program; two or more threads; one or more threads, and one or more processes; threads of different processes; threads of different programs; processes of different programs; or other suitable combinations.

The term "resource" as used herein includes, for example, a physical and/or virtual component of a computing system; a variable; a database; a table; a record; a data item; a list; a field; an object; a memory cell; a memory area; a memory block; a disk or a portion thereof; a storage unit or a portion thereof; a file; a folder; a directory; a network connection; or the like.

The terms "shared resource" or "common resource" as used herein include, for example, a resource which may be accessed by two or more processes, threads, programs, routines, subroutines, functions, or other suitable software components and/or hardware components.

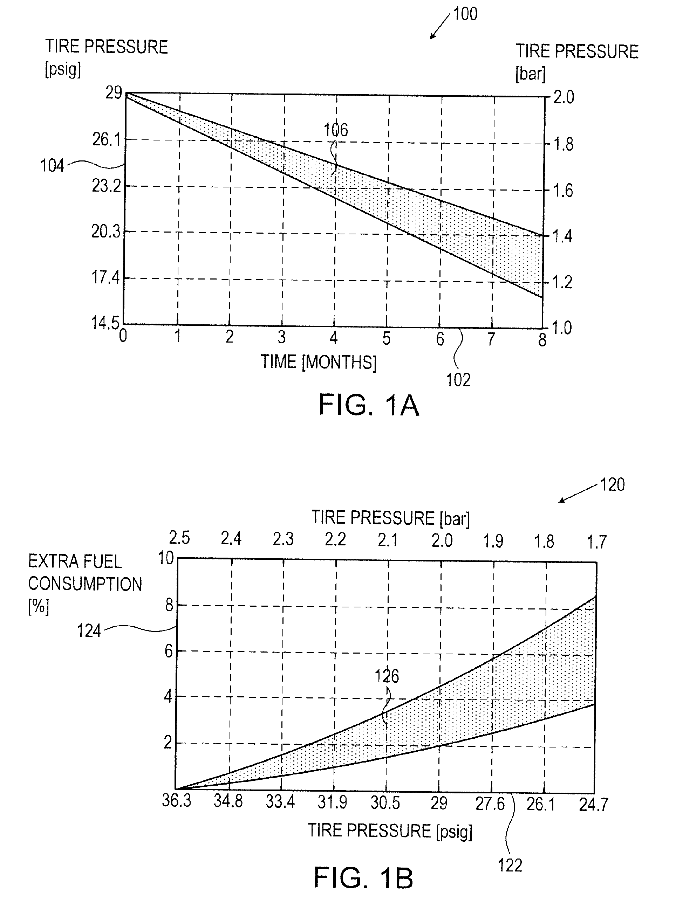

Reference is now made to Fig. 1A, which is a graph 100 of loss of tire pressure in bar over time without refill of air. Graph 100 shows a range 106 of loss of tire pressure (y axis, 1040 for a number of vehicles over a period of eight months (time, x axis 102). At time zero, all vehicles started off with a tire pressure of 2 bars (about 29 psig). After four months, the average tire pressure was about 1.6 bars or 23.2 psig. After eight months, the average tire pressure was about 1.3 bar or around 18 psig.

Fig. 1B is a graph 120 of increase in a range 126 fuel consumption in percent (y axis, 124) against reduced tire pressure in bar (x axis, 122). As can be seen, if a driver drives at around 25% too low tire pressure, he/she will use around 4-7% more fuel, whether the fuel be fossil-based, electric battery power or other or combinations thereof. For example, if the required tire pressure on the tires of a Toyota Corolla is 32 psig (around 2.2 bar) and the driver measures the tire pressure after 6 months and finds that the average tire pressure on all four tires is 26 psig (around 1.8 bar), then the increase in fuel consumption according to graph 120 is around 3.5% (5-1.5). Thus, if he has driven 15,000 km in 6 months and has paid $4000 on gas, then the monetary loss is $140, or $280/year. If his tire pressure after 6 months is 25 psig or around 1.7 bar, then his monetary loss is 4.5% (6-1.5), amounting to $360.

In the US in 2007, there were around 250 million passenger vehicles. If the average American fills his tires, four times per year, and the tire pressure is around 1.7 bar per graph 100, prior to filling, then the estimated excess fuel consumption is around 6 percent. This reflects an additional cost of around $3,000,000,000 (assuming the average amount spent on gas per annum in US is $2000 (0.06 x $2000 x 250,000,000). In terms of additional gas consumption, environmental pollution and global warming is as follows:

Approximately 2.36 Kg CO₂ are produced per liter of gas. Assuming that the average American buys 2500 liter gas/year, then he produces 5900 kg CO₂ per year. A six percent saving would represent 0.06 x 5900 x 250,000,000= 88,500,000,000 kg CO₂ per year for all Americans. There would be a concomitant reduction in global warming, proportional to the reduction in weight of CO₂ emitted.

A carbon credit is a generic term meaning that a value has been assigned to a reduction or offset of greenhouse gas emissions. One carbon credit is equal to one ton of carbon dioxide, or in some markets, carbon dioxide equivalent gases. Thus, according to the above calculation, for a 6 percent saving in fuel, there would be around 60-100 million carbon credits. Each ton is valued at around US$1-30. However, this value may change over time. Thus, a six percent saving in fuel in US would currently represent a value of $60-3000 million.

In an informal questionnaire, most drivers who were asked how frequently they filled their tires responded with a "never to 4 times a year" response. This preliminary but non-statistical indication may show that there is more than 3% fuel, and possibly more than 5% may be saved by changing attitudes and service provision of tire filling.

One embodiment of the present invention provides a user-friendly air pumping system comprising at least some of the following elements:
a) a weight load cell for checking the car weight in real time with current load;
b) a multiple lead pump, enabling filling of at least two tires simultaneously;
c) a frame for conveniently supporting leads of the multilead pump above and around a vehicle;
d) a barcode system and/or number plate reader connected to a server over a public network for checking car model and car history, adapted to provide data relating to the optimal front and rear tire pressures for the specific car model, load and atmospheric conditions; and
e) design of instructions/call center/ online help for users.

A second embodiment of this invention provides an incentive-based economic business model for frequent gas stations air-pressure service provision.

There is a a need to provide incentives to the gas/battery service station owner, the gasoline fuel provider and the vehicle user so that he/she would use the service frequently and the station owner would receive some economic incentive for providing the service. Additionally, according to some embodiments of the invention, the station chain owner (such as PAZ, SONOL DELEK, BP, SHELL, TEXACO or the like) would also be provided with incentives to provide such a service.

A third embodiment of the present invention provides a new gas station layout suitable for frequent tire inflation and pressure check. This should take into account, adjustments for allowing fuelling of hybrid and/or electric cars, which will also require frequent tire check.

According to some embodiments, the user-friendly air pumping system is provided at a standard gas or petrol station.

According to some additional embodiments, the user-friendly air pumping system is provided at a hydrogen-based fuels no-emission service stations described in US2007144605 and WO02103833A.

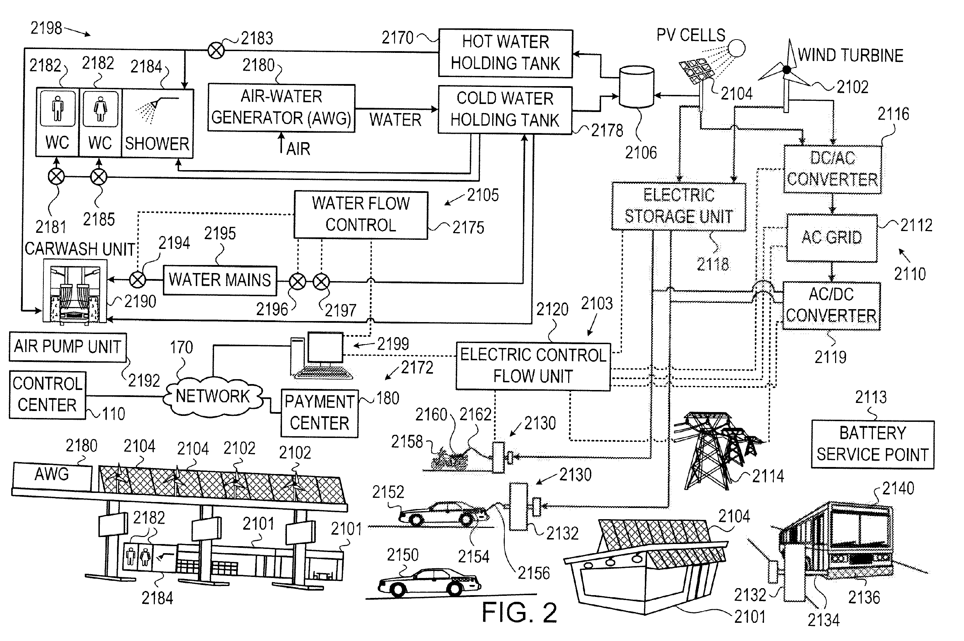

According to further embodiments, the air pumping system is provided as air pump unit 2192, at a no-emissions service station 2198. Reference is now made to Fig. 2, which is a simplified pictorial illustration of a no-emissions service station 2198 for reducing electric fuel consumption in electric vehicles, in accordance with an embodiment of the present invention. No-emissions service station 2198 may be as described in co-pending US Patent Application No. 12/833,987 entitled "NO EMISSIONS SERVICE STATION FOR ELECTRIC VEHICLES" and/or co-pending US Patent Application No. 12/833,990. "NO EMISSION SERVICE STATION PAYMENT SYSTEM AND METHOD" filed July 11, 2010, both applications incorporated herein by reference in their entirety.

It should be understood that the details of no-emissions service station 2198 of the present invention corresponds, according to some embodiments, to "stationary service station 140" in Fig. 1 of co-pending US patent application Nos. 12/828,398 and 12/828,406, incorporated herein in their entirety by reference.

By "no-emission" is meant that the service station does not handle fossil fuels and thus no vapors or emissions from fossil fuels are emitted into the environment.

No-emissions service station 2198 is an environmentally-friendly service station. According to some embodiments, it comprises some or all of the following features:
a) At least one master charger unit 2130, which are, according to some embodiments, large batteries of in a range of 7-3000 kW.h. In some cases, the range may be 1-50 MW.h or even more. These charger units are adapted to charge a plurality of electric vehicles such as, motorbikes 2160, cars 2150, 2152, buses 2140 and other vehicles (not shown). The vehicles may be similar or identical to electric vehicle 120. The capacities and charging features of master units 2130 may be similar or identical to master battery 152, 132 in Fig. 1 of co-pending US patent application Nos. 12/828,398 and 12/828,406, filed July 01, 2010.
b) An electricity control system 2103 comprising an electricity control flow unit 2120, a large electricity storage unit 2118, at least one solar panel 2104 and at least one DC-AC converter 2116. The large electricity storage unit 2118 may be of a size of 1-100 MW.h or even more. The control system may be operated and controlled via a communication network (170 in Fig. 1 of co-pending US patent application Nos. 12/828,398 and 12/828,406) and/or via wired connections. Pylons 2114 transport grid electricity from an alternating current grid 2112 to the station and into an electricity storage unit 2118. Additionally or alternatively, electricity may be transferred from the electricity storage unit to the grid. The electricity transfer is controlled by the electricity control flow unit 2120 and one non-limiting example of the operation of this system is provided in Fig. 2.
c) A water control system 2105 comprising a water flow control unit 2175, a cold water tank 2178, a hot water tank 2170, at least one water solar heater tank 2106 valves placed at suitable locations, such as, but not limited to, valves 2181, 2183, 2185, 2194, 2196, 2197. Some water conduits 2107, which fluidly connect between the tanks and at least one carwash unit 2190, at least one toilet unit 2182, at least one shower unit; station buildings and café unit 2101 and any other water using facilities in the station (not shown).
d) At least one building 2101 comprising, at least in part a roof 2117 comprising solar panels 2104, such as photovoltaic solar panels (PV) and at least one solar heater water tank 2106. In some cases, the roof may also house one or more wind turbines 2102. The wind turbines and the PV panels may each provide, directly or indirectly, direct current (DC) electricity which may be converted by a DC-AC converter 2116 into AC electricity. The AC electricity may be fed into grid 2112.
e) A payment system 2172 comprising at least one computer 2199, typically housed in the at least one building 2101, in communication with a communication network 170, a payment center 180 and a control center 110, as described in co-pending US patent application Nos. 12/828,398 and 12/828,406, filed July 01, 2010, incorporated herein in their entirety by reference.
f) At least one air pump unit 2192 for pumping the tires of the electric vehicles.
g) A battery service point 2113 adapted to perform electrical checks to the battery packs of the electric cars, to check for leakage, breakage and other faults. The service point will also provide replacement batteries or parts thereof as may be required to the electric vehicles.

It should be understood that no-emissions service station 2198 is constructed and configured to provide at least some of the following advantageous energy-efficient and environmental features over the prior art service stations:
a) No fossil fuels used in service station 2198, whether in the liquid or gaseous phase, thus no emissions due to the use, handling, transport or transfer of these fuels. No gaseous emissions to the environment therefrom and no global warming effect therefrom. No spills or liquid contamination of the soil, sewers or wastewater from the service station.
b) Use of air-water generator (s) 2180 thus reducing dependency on mains water supply from mains water 2195. There may even be a positive supply of water from station 2100 to the mains water 2195. Efficient provision, at least in part, of own supply of electricity from PV panels 2104 and/or wind turbines 2102, thus minimizing use of grid electricity from AC grid 2112.
c) No use of hydrogen-based fuels, per prior art no-emission service stations described in US2007144605 and WO02103833A, thereby reducing explosion risks.

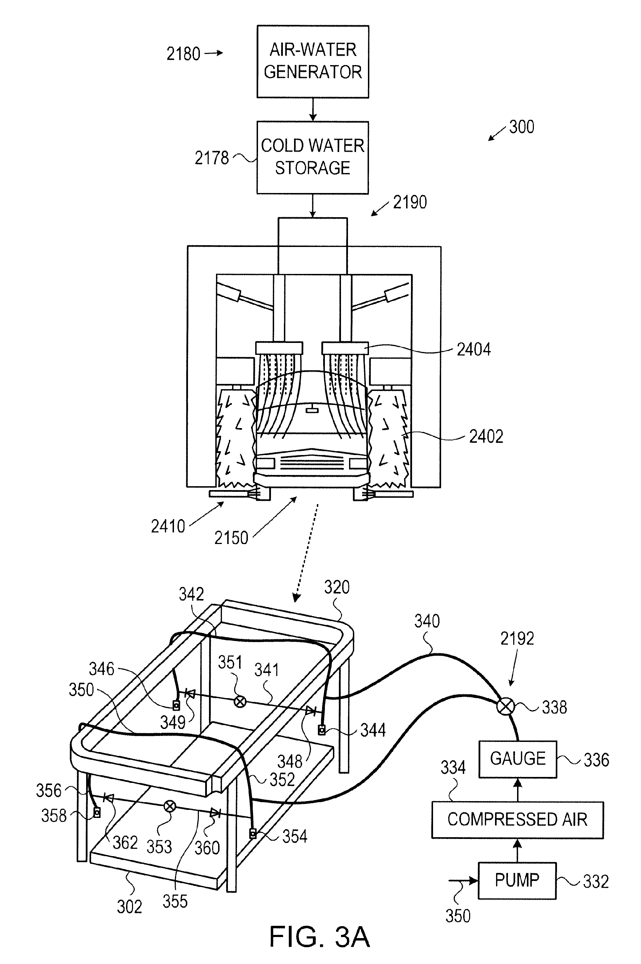

Reference is now made to Fig. 3A, which is a simplified pictorial illustration of an air pump system 300 for pumping up tires, placed alongside a carwash apparatus 2190, in accordance with an embodiment of the present invention. Carwash apparatus may be any suitable commercially available vehicle washing apparatus, known in the art, such as those described in the following patent publications: US2010089427, US2009272681, US4168232 and US3604434. Additionally or alternatively, carwash apparatus 2190 may be in fluid connection with a cold water storage tank 2178 and an air-water generator 2180, as previously described in co-pending US Patent Application No. 12/833,987entitled "NO EMISSIONS SERVICE STATION FOR ELECTRIC VEHICLES" filed 11th July 2010. The air-water generator may be any commercially-available air water generator. In some cases, the air-water generator will produce at least 5000 liter/day. In some further cases, at least 20,000 liter water/day.

Air pump system 300 comprises a user-friendly air pumping system comprising at least some of the following elements:
a) a weight load cell 302 for checking the car weight in real time with its current load;
b) a multiple lead air pump unit 2192, enabling filling of at least two tires simultaneously;
c) a frame 320 for conveniently supporting leads 342, 350 of the multilead pump above and around a vehicle 2150;
d) a barcode system and/or number plate reader 321 (or optical eye or other suitable means for defining the vehicle) connected to a server (such as at least one computer system 119 over a public network 170 USSNs 12/828,398 and 12/828,406) for checking car model and car history, adapted to provide data relating to the optimal front and rear tire pressures for the specific car model, load and atmospheric conditions; and
e) A call center for provision of online help for users, such as control center 110 in co-pending USSNs 12/828,398 and 12/828,406.

Air pumping system comprises air pump unit 2192, with the following features:
i.A pump or motor 332 adapted to receive air from the environment via a conduit 350. In some cases, the pump may be replaced by a compressed air balloon or source 351 (not shown).
ii.A compressed air holding vessel 334;
iii.An air gauge 336 in fluid communication with the holding vessel and with at least one lead or conduit 340 connecting to:
   a. a front tire lead 342; and
   b. a rear/back tire lead 350.

The front tire lead comprises a connector conduit 341 configured to connect between two ends of the lead. At each end there is disposed a tire connection device 344, 346, each constructed and configured to connect to an air entry port (not shown) on each tire. Connector conduit 341 comprises a valve 351, which is remotely operated by computer 310 and two one way valves 349, 351, also remotely operated by computer 310.

The rear tire lead comprises a connector conduit 355 configured to connect between two ends of the lead. At each end there is disposed a tire connection device 358, 354, each constructed and configured to connect to an air entry port (not shown) on each tire. Connector conduit 351 comprises a valve 353, which is remotely operated by computer 310 and two one way valves 360, 362, also remotely operated by computer 310.

According to some embodiments of the present invention, air-pump system 300 is operated by at least one service station operator 380. The station operators may perform some of the cleaning operations to the vehicle, as well as, checking and filing tires 2151 of the vehicle. According to some embodiments, a vehicle driver 102 does not need to leave his vehicle while the vehicle passes through carwash unit 2190 and through air pumping system 300. Connector conduit 341, when the valves are open, is constructed and configured to equalize the pressure in the two tires.

One advantage of the air pumping system of the present invention is that it does not rely on sensors in the tires or in the vehicle of new model vehicles, but can provide data for all old vehicles, which are currently in use.

Another advantage is that the data is obtained from the air pump system, typically after the vehicle has been washed, including washing of the tires 2151 with tire wash unit 2410. This means that the tires are not hot, due to driving on the road, but are all at a similar temperature, near to or equal to the ambient temperature. Moreover, providing a real-time weight of the vehicle enables correct filling of tire pressure according to a look-up table for that particular vehicle at that particular load.

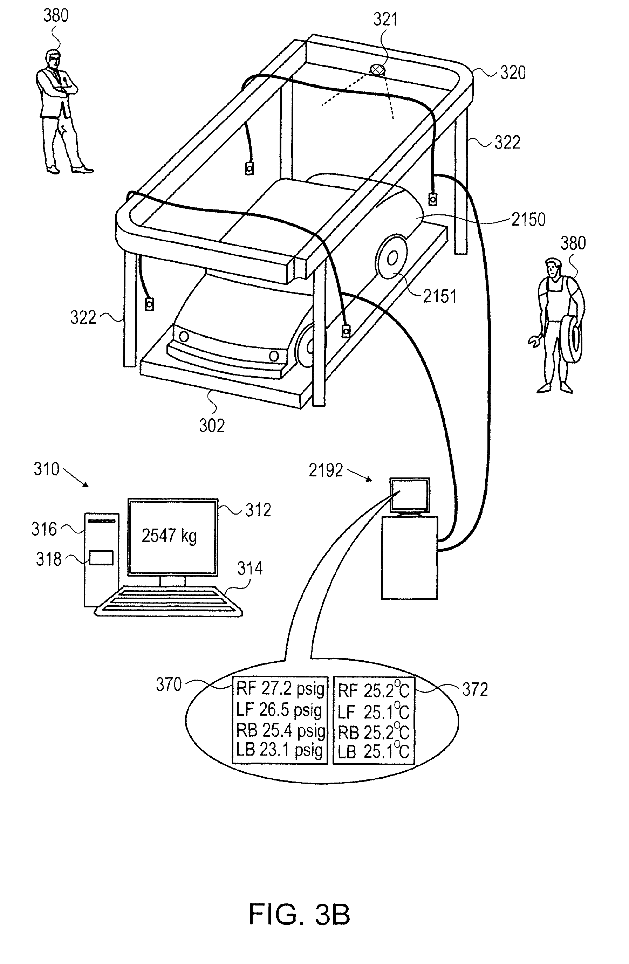

Reference is also made to Fig. 3B, which is another simplified pictorial illustration of air pump system 300. Air pumping system may have a computer system 310 associated therewith, as well as being, in some cases, in communication with computer 2199 at service station building 2101 (in Fig. 1 of co-pending USSN 12/833,990 entitled "NO EMISSION SERVICE STATION PAYMENT SYSTEM AND METHOD"). Computer system 310 comprises a communication lead 2304 to load cell 302. A display 312 can display real-time data relating to the vehicle load. The computer system further comprises at least one input device 314, such as a keyboard and/or mouse and/or the display may have touch-screen capabilities, as are known in the art. The computer system further comprises a processor 316 and a memory 318.

Tire pumping unit 2192 may also comprise at least one display 370, 372 for displaying real-time data relating to tires 2151. This data may include for example, pressure and temperature for each tire.

It should be noted that the systems and methods of the present invention do not require any sensors placed in the vehicle or close to or in the tires thereof. The systems and methods of the present invention can thus be applied generally to all new and old vehicles.

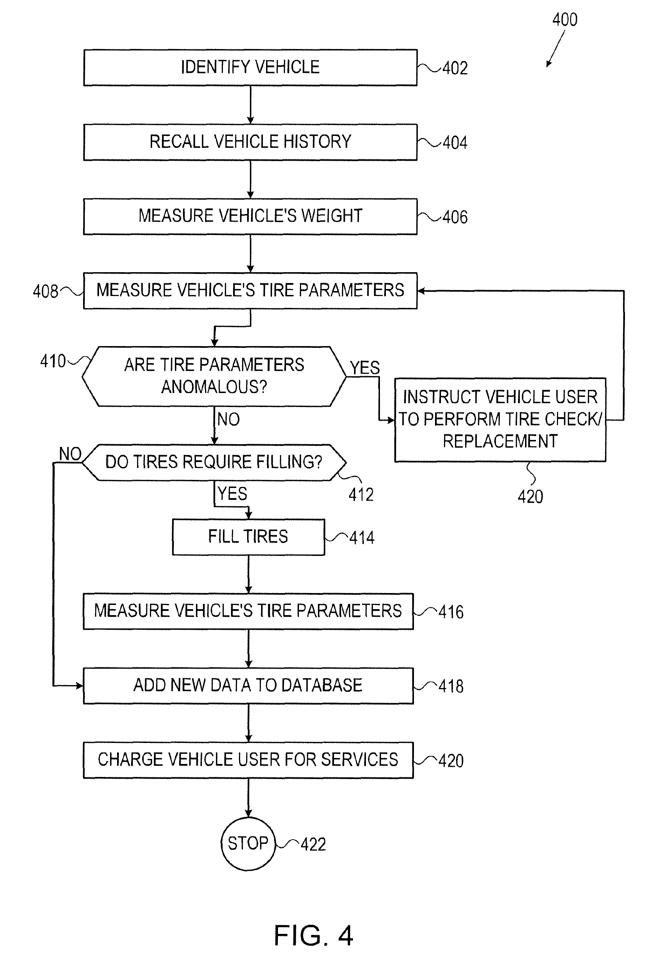

Reference is now made to Fig. 4, which is a simplified flow chart 400 of a method for controlling tire pressure, in accordance with an embodiment of the present invention.

In a vehicle identifying step 402, vehicle 2150 is identified by at least one of the following methods:
a) Optical eye 321 transfers images of number plate to computer 310, which relays data and/or images to control center 110 (Fig. 1, USSNs 12/828,398 and 12/828,406). The control center checks databases in system 400 (Fig. 4), such as in user account module 422 and finds a match with data pertaining to user 102.
b) User/driver 102 provides a credit/identity card to the service station operator, who passes the card through a magnetic card reader (not shown) in communication with the control center. The control center identifies the vehicle associated with user 102.
c) A mobile device 170 is detected by mobile device detection means (not shown) in communication with the control center. The control center identifies the user of the device and thus the vehicle associated with user 102.
d) A bar-code reader (not shown) is used to read a bar code (not shown) such as on a sticker on a window of the vehicle. The bar code reader is in communication with the control center. The control center identifies the user of the vehicle, and thus the vehicle associated with user 102.
e) Any other suitable method known in the art.

In a recalling history step 404, the control center retracts data from the electric vehicle module 408 (Fig. 4, USSN 12/828,398) relating to the history of vehicle 2150.

In a weight measuring step 406, the weight of the vehicle is transmitted from load cell 302 to computer 310. Additionally or alternatively, this step may be performed by unwired communication directly or indirectly to the control center. Additionally or alternatively, this step may be performed by unwired communication directly or indirectly to the computer 310. According to some further embodiments, a manual correction may be made to the measured weight. For example, if a driver expects to add 300 kg to the weight of the vehicle, he may inform the service station operator 380 and ask him/her to input the added weight into computer 310 to define the vehicle future weight.

In a measure vehicle's tire parameters step 408, at least the tire pressure of the tires of vehicle 2150 are measured. Optionally, other parameters such as tire temperature, tire tread depth and other parameters are measured by methods known in the art.

According to one embodiment, service station operators 380 each take one end of lead 342. One operator connects tire connection device 344 to the front left wheel tire having removed a dust cap therefrom (not shown) if required, the second operator connects tire connection device 346 to the front right wheel tire having removed a dust cap therefrom (not shown) if required. At this stage valves 348, 349 and 351 are closed. Valve 338 is open and air pump gauge 336 simultaneously measures the air pressure in the two front tires and displays the result on display 370.

As can be seen in Fig. 3B, the values 27.2 psig and 26.5 psig appear on the display.

In a checking step, 410, these values are compared against a table for normal range for this model of vehicle in a database, such as in module 406 (Fig. 4, USSNs 12/828,398). In this case, the values are in the normal range and thus the parameter values are not anomalous.

In a questioning step 412, it is checked to see whether the tires require filling. For example, if the optimal pressure for vehicle 2150's front tires is 34 psig, then these tires require filling. If the measured tire pressure were 34 psig, then steps 414-416 would be skipped over and system 300 would add the data relating to the new measured parameters of step 408 to the database in step 418.

In a tire filling step 414, system 300 fills the front tires. This may be performed by opening valves 348, 349, 351, such that both tires attain the same final pressure. The system may automatically set the set point pressure according to the lookup table. Additionally, it may adjust the pressure in accordance with the vehicle weight and/or temperature of the tires, as is known in the art (again, this may be by comparing to a virtual /computerized lookup table). In the case where a vehicle future weight has been inputted, the final pressure will be adjusted to the vehicle future weight.

In a second measuring step 416, valves 349, 351, 348 are closed and system 300 is operative to measure the tire pressure in the front left and front right tires.

The data is conveyed to a database in data adding step 418. The database is typically in control system (400 at control center 110 in co-pending USSN 12/828,398).

The vehicle user may be charged a fee for carwash and/or tire checking and or tire filling services provided in a charging fee step 420. In some cases, the tire checking and tire filling charges will be provided as part of the carwash fee. In further cases, the tire checking and tire filling charges will be free.

Turning back to step 408, if the values were 27.2 psig and 34.5 psig for the left and right front tire respectively, then in step 412, it would be decided to fill the left tire and not fill the right tire. Then, in filling step 414, valve 348 would be closed by system 300. At the end of filling step 414, valve 348 would be opened to equilibrate the pressures between the two tires. Valve 351 would then be closed in second measuring step 416.

Turning back to step 410, as can be seen in Fig. 3B, the right back tire pressure is 25.4 psig and the left back tire pressure is 23.1 psig. The outcome of step 410 is that the left back tire pressure of 23.1 psig is anomalous. Thus vehicle user 102 is instructed in an instructing and repair step 422 to have the left back tire checked at a tire check point (not shown). If the tire is punctured or otherwise faulty, it is repaired or replaced in step 422. Thereafter step 408 to 420 are performed, as described hereinabove.

It should be understood that the method of Fig. 4 may take less than 5 minutes, less than three minutes and, in some cases, less than two minutes. Many steps in this method may be at least partially automated and computer-controlled.

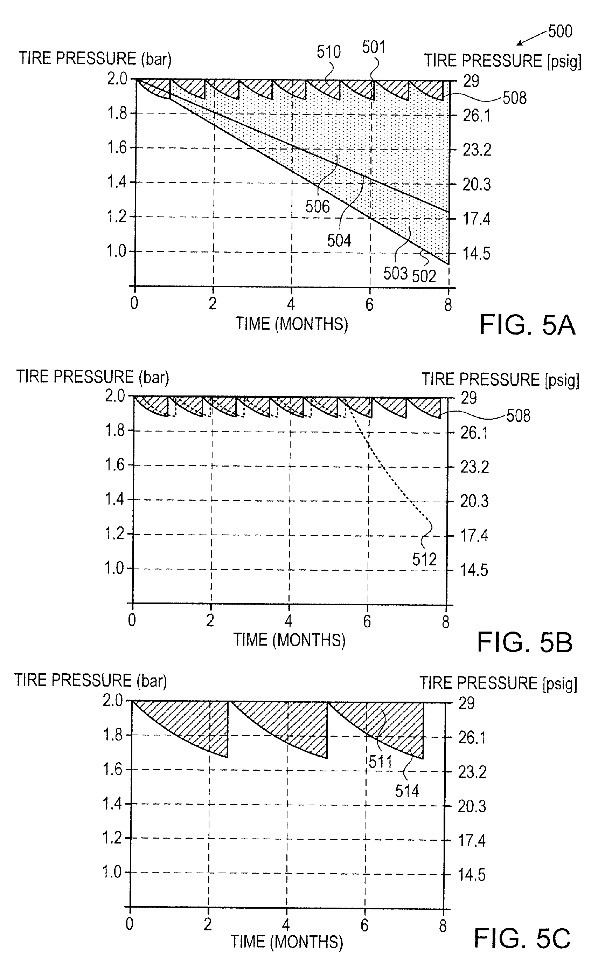

Reference is now made to Figs. 5A, which shows a graph 500 of loss in fuel efficiency over time for different frequencies of tire filling, in accordance with an embodiment of the present invention. As was shown in Fig. 1A, there is a standardized range 503 of tire pressure loss over time for standard land vehicles. One vehicle, say vehicle 2150, depicted by line 508, has its tires filled up once a month. Thus the lowest tire pressure observed over eight months is 1.8 bar and the highest, after filling is 2.0 bar. The loss in fuel efficiency is proportional to shaded area 510, and may be in the region of 1%, or a 1% increase in fuel usage over a theoretical maximum for that type of vehicle under the same driving conditions.

A second vehicle does not have the tires filled in an eight month period, depicted by line 502. This represents a gradual loss of tire pressure from 2 bar to around 1.1 bar. The loss in fuel efficiency is depicted by a cross-hatched area 506 and may represent 5-15% increase in fuel usage.

In Fig. 5B, the tire pressure of two front tires is shown by 508 and 512 respectively. It is noted that for the first five months the tire pressures of the two tires are very similar. However, after 6 months, a sudden drop is noted for the second tire, at point 512. This indicates that the second tire may be flat. This would be noted, using the method of Fig. 4 at step 410. Accidents can be prevented by this method by detecting changes in the tire pressure a) with respect to previous measurements and b) relative to at least one other tire on the vehicle. The faulty tire can be replaced or repaired, thereby preventing a breakdown in transit or an accident.

Fig. 5C shows the tire filling behavior of the user of a third vehicle. Here, the tires are filled every two-three months. This represents a loss in fuel efficiency in the range of 2-6 %.

In order to persuade vehicle users to change from tire-filling behavior, depicted in Fig. 5A, line 502 or that of Fig. 5C, the user has to be provided with a tire filling service that requires little effort and wastes little time. The method shown in Fig. 4 is both fast and does not require that the vehicle user perform it himself/herself. It should be understood that the systems and methods of the present invention are applicable to gas-fueled vehicles, biodiesel-fueled vehicles, electric vehicles, hybrid vehicles and any other land vehicles.

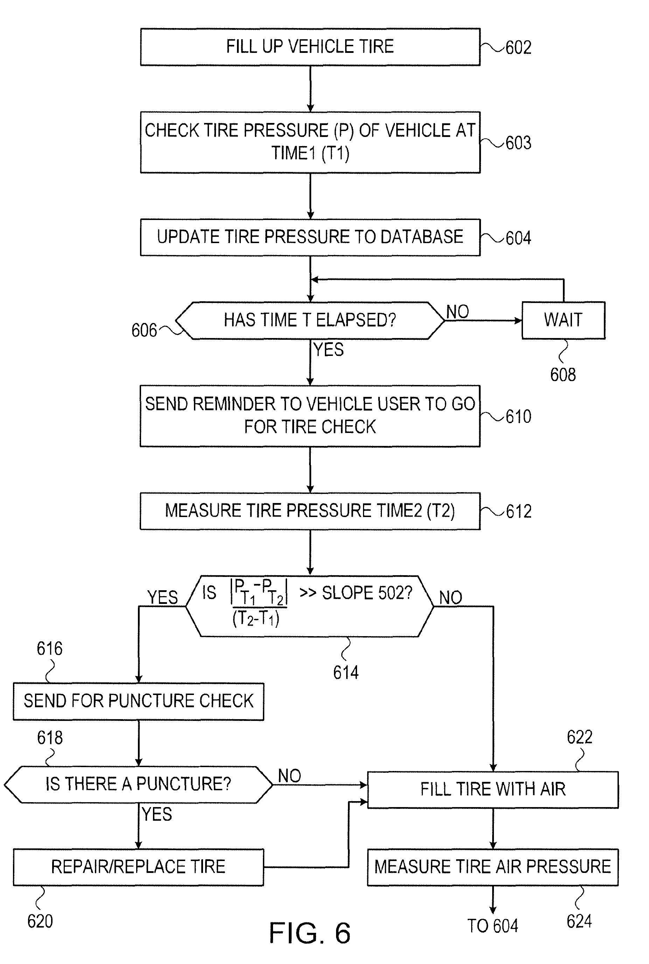

Reference is now made to Fig. 6, which is a simplified flow chart 600 of a method for checking for a flat tire, in accordance with an embodiment of the present invention. In a filling up tire step 602, the tires of the vehicle are filled.

After a time period, such as two months, in a checking vehicle's tire pressure step 603, the tire pressure of the tires of vehicle 2150 is measured at time t₁. This step may be similar or identical to step 408 hereinabove.

The data is conveyed to a database in a data updating step 604. The database is typically in control system (400 at control center 110 in co-pending USSN 12/828,398). Additionally or alternatively, the database may be in memory 318 of computer 310. Additionally or alternatively, the database may be in computer 2199 (in co-pending U.S. patent application No. 12/833,990 entitled "NO EMISSION SERVICE STATION PAYMENT SYSTEM AND METHOD").

In a time elapsed checking step 606, system 300 checks to determine the time elapsed from the last tire check. For example a predetermined time period T may be set at a fortnight. If the time elapsed, T is two days in step 606, no action will be taken and the system will wait in waiting step 608. If the time elapsed is a fortnight or more, user 102 of vehicle 2150 is sent a reminder to perform a tire check in reminding step 610. This reminder may be by SMS, email, telephone call or by any other method known in the art to user 102 or to his mobile device 170.

In a second tire checking step 612 at time t₂, the tire pressure of the tires of vehicle 2150 is measured. This step may be similar or identical to step 408 hereinabove.

The data obtained is then compared in comparing step 614 to slope data for the same type of vehicle, such as line 502 in Fig. 5A. If the pressure drop of the tire, divided by the time period between the measurements in step 602 and step 612 is significantly greater than slope 502, then system 300 will indicate to user 102 to send the vehicle for a puncture check in sending step 616.

In a puncture checking in step 618, it will be ascertained by methods known in the art if there is a puncture. If there is a puncture, then the tire is repaired or replaced in tire repair step 620. If there is no puncture in step 618 or if the tire has been repaired/replaced in step 620, then the tire is filled in filling step 622. The tire pressure is measured again in step 634 (similar or identical to step 408). Thereafter, steps 604 to 624 are repeated again.

One of the major problems with the prior art systems of in-vehicle tire sensors is that though the vehicle driver/user may be aware of changes in tire pressure, he/she has little or no incentive to go and fill the tires.

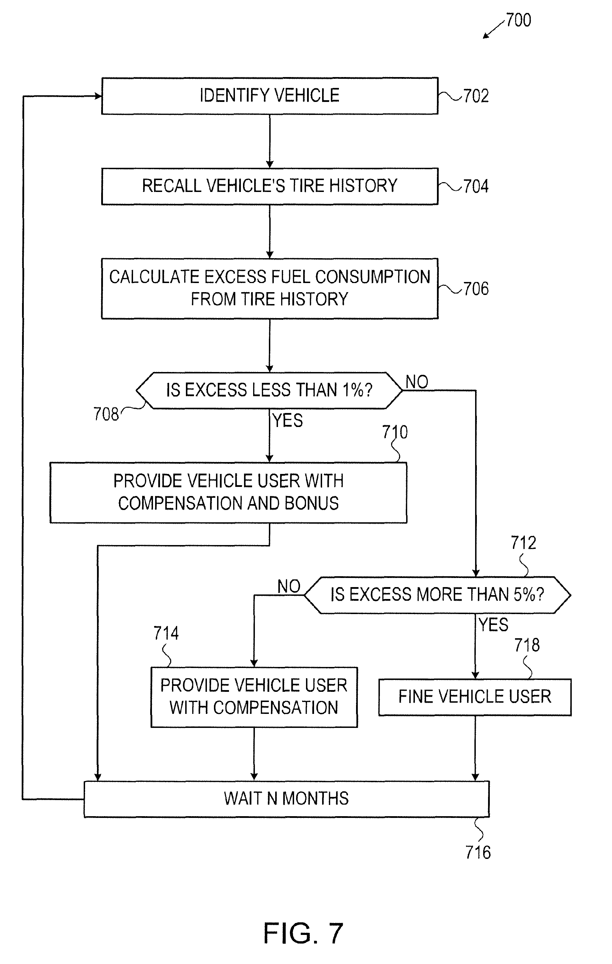

Turning to Fig. 7, there is seen a simplified flow chart 700 of an incentive-based method for reducing fuel consumption, in accordance with an embodiment of the present invention. This method may be performed monthly, quarterly, annually or at any suitable time interval.

In a vehicle identifying step 702, vehicle 2150 is identified by at least one of the following methods:
a) Optical eye 321 transfers images of number plate to computer 310, which relays data and/or images to control center 110 (Fig. 1, USSNs 12/828,398 and 12/828,406). The control center checks databases in system 400 (Fig. 4), such as in user account module 422 and finds a match with data pertaining to user 102.
b) User/driver 102 provides a credit/identity card to the service station operator, who passes the card through a magnetic card reader (not shown) in communication with the control center. The control center identifies the vehicle associated with user 102.
c) A mobile device 170 is detected by mobile device detection means (not shown) in communication with the control center. The control center identifies the user of the device and thus the vehicle associated with user 102.
d) A bar-code reader (not shown) is used to read a bar code (not shown) such as on a sticker on a window of the vehicle. The bar code reader is in communication with the control center. The control center identifies the user of the vehicle, and thus the vehicle associated with user 102.
e) Any other suitable method known in the art.

In a recalling history step 704, the control center retracts data from the electric vehicle module 408 (Fig. 4, USSN 12/828,398) relating to the history of vehicle 2150.

Additionally or alternatively, the actual fuel consumed may be divided by the actual distance traveled.

In a calculating step 706, the excess fuel consumption of the vehicle is calculated from the tire history (exemplified with respect to Fig. 5). Additionally or alternatively, this may be performed using standardized formulae, adapted from graphs, such as those in Figs. 1A-1B and 5A-5C.

For example, vehicle 1 has an excess fuel consumption of 0.8%, vehicle 2 has a excess fuel consumption of 8.5%, and vehicle 3 has an excess fuel consumption of 3.5%

In a checking step 708, it is checked to see whether the vehicle has an excess fuel consumption of less than one percent. Only vehicle 1 meets this criterion. Thus, the outcome of this step is "yes" for vehicle 1.

In a vehicle user compensation step 710, the user of vehicle 1 is provided with a bonus. The bonus may be in accordance with a look up table, as is exemplified in Table 2 hereinbelow. The bonus may be a function of the cost/liter of fuel, the fuel consumption of the vehicle/annum and the fuel efficiency of the user. According to some embodiments, the bonus may be proportional to the fuel efficiency or inversely proportional to the excess fuel consumption %.

As is shown in flowchart 700, the user may be fined if after a checking step 712, it is determined that his excess fuel efficiency is more than a few percent, such as 5%, in a fining step 718. In some cases, the user may not receive a bonus or any positive compensation in a compensation step 714.

According to other embodiments, the bonus may be disproportional to the fuel efficiency and may provide a much greater bonus to the more fuel-efficient drivers.

**Table 2 Examples of compensation tables for low excess fuel consumption.**

| EXCESS FUEL CONSUMPTION [%] | TOTAL FUEL CONSUMPTION LITER/YEAR* 2000 | TOTAL FUEL CONSUMPTION LITER/YEAR* 4000 |
|---|---|---|
| 0 | $500 | $1200 |
| 0.2 | $300 | $600 |
| 0.5 | $200 | $300 |
| 1 | $100 | $200 |
| 1.5 | $100 | $100 |
| 2 | $50 | $100 |
| 3 | 0 | 0 |
| 4 | 0 | 0 |
| 5 | -$400 | -$700 |
| 6 | -$600 | -$1000 |
| 7 | -$1000 | -$1200 |

| | | |
|---|---|---|
| *these values can be replaced by power consumption for electric vehicles | | |

In some cases, the vehicle user will thus receive a return of several tens of percent of his fuel costs. In other cases, he will be fined for being so sloppy about seeing to the air filling of his tires.

According to some additional embodiments, the service station (owner) may also receive bonuses from the fuel/battery/power provider. For example, if the vehicle user receives a bonus, the service station may receive a matching bonus. Thus, the service station may both receive a fee from the user for filling and/or repairing and/or measuring tire pressure, as well as receiving bonuses for fuel economy of the vehicle users.

In some cases, the user will not pay a fee for the filling and/or measuring tire pressure and/or carwash, but the service station is compensated by the control center 110 or payment center 180 for provision of these services. For example, if the average excess fuel consumption % of all vehicles at service station A is 1.8% and that of service station B is 4%, the owner of service station A may receive a 1% reduction in the cost of fuel purchase/L. Service station B may not receive any reduction and may even pay an extra charge for the purchase of fuel.

Additionally or alternatively, the service station owner may receive carbon credits for fuel saved or other incentives which have a monetary value. For example, if the national US loss in fuel efficiency due to low tire pressure is 6%, this represents, according to simple calculations, approximately 60-100 million carbon credits. Thus, a service station which manages to reduce the average loss in fuel efficiency of all vehicles serviced by the station to 2% saves an annual 4% of fuel consumed. Assuming for example, that there are 120,000 gas stations in the US, then the equivalent saving of this station would be in the range $60,000,000-3000,000,000/120,000= $500-25,000. Thus, for example, the service station owner could be compensated financially in the range of $500-10,000 and control center 110 owner would receive the rest of the carbon credits compensation of that service station ($ 0-24,500). Control center owner, could thus, receive compensation in carbon credits or equivalent from all stationary service stations 140 in system 100 (Fig. 1 in co-pending USSNs 12/828,398 and 12/828,406). It should be understood that these service stations may provide services for both for fossil fuel driven vehicles and for electric vehicles. Additionally or alternatively, some of the service stations may be no emission service stations, predominantly providing services for electric vehicles, as are described in co-pending USSNs 12/833,987 and 12/833,990, filed 11 July 2010, incorporated herein by reference. These no-emissions service stations may provide carwash, tire check, tire filling and other services to fossil fuel driven vehicles too.

Other suitable operations or sets of operations may be used in accordance with some embodiments. Some operations or sets of operations may be repeated, for example, substantially continuously, for a pre-defined number of iterations, or until one or more conditions are met. In some embodiments, some operations may be performed in parallel, in sequence, or in other suitable orders of execution

Discussions herein utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

Some embodiments may take the form of an entirely hardware embodiment, an entirely software embodiment, or an embodiment including both hardware and software elements. Some embodiments may be implemented in software, which includes but is not limited to firmware, resident software, microcode, or the like.

Some embodiments may utilize client/server architecture, publisher/subscriber architecture, fully centralized architecture, partially centralized architecture, fully distributed architecture, partially distributed architecture, scalable Peer to Peer (P2P) architecture, or other suitable architectures or combinations thereof.

Some embodiments may take the form of a computer program product accessible from a computer-usable or computer-readable medium providing program code for use by or in connection with a computer or any instruction execution system. For example, a computer-usable or computer-readable medium may be or may include any apparatus that can contain, store, communicate, propagate, or transport the program for use by or in connection with the instruction execution system, apparatus, or device.

In some embodiments, the medium may be or may include an electronic, magnetic, optical, electromagnetic, InfraRed (IR), or semiconductor system (or apparatus or device) or a propagation medium. Some demonstrative examples of a computer-readable medium may include a semiconductor or solid state memory, magnetic tape, a removable computer diskette, a Random Access Memory (RAM), a Read-Only Memory (ROM), a rigid magnetic disk, an optical disk, or the like. Some demonstrative examples of optical disks include Compact Disk-Read-Only Memory (CD-ROM), Compact Disk-Read/Write (CD-R/W), DVD, or the like.

In some embodiments, a data processing system suitable for storing and/or executing program code may include at least one processor coupled directly or indirectly to memory elements, for example, through a system bus. The memory elements may include, for example, local memory employed during actual execution of the program code, bulk storage, and cache memories which may provide temporary storage of at least some program code in order to reduce the number of times code must be retrieved from bulk storage during execution.

In some embodiments, input/output or I/O devices (including but not limited to keyboards, displays, pointing devices, etc.) may be coupled to the system either directly or through intervening I/O controllers. In some embodiments, network adapters may be coupled to the system to enable the data processing system to become coupled to other data processing systems or remote printers or storage devices, for example, through intervening private or public networks. In some embodiments, modems, cable modems and Ethernet cards are demonstrative examples of types of network adapters. Other suitable components may be used.

Some embodiments may be implemented by software, by hardware, or by any combination of software and/or hardware as may be suitable for specific applications or in accordance with specific design requirements. Some embodiments may include units and/or sub-units, which may be separate of each other or combined together, in whole or in part, and may be implemented using specific, multi-purpose or general processors or controllers. Some embodiments may include buffers, registers, stacks, storage units and/or memory units, for temporary or long-term storage of data or in order to facilitate the operation of particular implementations.

Some embodiments may be implemented, for example, using a machine-readable medium or article which may store an instruction or a set of instructions that, if executed by a machine, cause the machine to perform a method and/or operations described herein. Such machine may include, for example, any suitable processing platform, computing platform, computing device, processing device, electronic device, electronic system, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit; for example, memory, removable or non-removable media, erasable or non-erasable media, writeable or re-writeable media, digital or analog media, hard disk drive, floppy disk, Compact Disk Read Only Memory (CD-ROM), Compact Disk Recordable (CD-R), Compact Disk Re-Writeable (CD-RW), optical disk, magnetic media, various types of Digital Versatile Disks (DVDs), a tape, a cassette, or the like. The instructions may include any suitable type of code, for example, source code, compiled code, interpreted code, executable code, static code, dynamic code, or the like, and may be implemented using any suitable high-level, low-level, object-oriented, visual, compiled and/or interpreted programming language, e.g., C, C++, Java, BASIC, Pascal, Fortran, Cobol, assembly language, machine code, or the like.

Functions, operations, components and/or features described herein with reference to one or more embodiments, may be combined with, or may be utilized in combination with, one or more other functions, operations, components and/or features described herein with reference to one or more other embodiments, or vice versa.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CDROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The present invention is described herein with reference to flow chart illustrations and/or block diagrams of methods, apparatus (systems) and computer program products according to embodiments of the invention. It will be understood that each block of the flow chart illustrations and/or block diagrams, and combinations of blocks in the flow chart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flow charts and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flow charts and/or block diagram block or blocks.

The flow charts and block diagrams in the Figures illustrate the architecture, functionality, and operation of possible implementations of systems, methods and computer program products according to various embodiments of the present invention. In this regard, each block in the flow charts or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flow chart illustrations, and combinations of blocks in the block diagrams and/or flow chart illustrations, can be implemented by special purpose hardware-based systems that perform the specified functions or acts, or combinations of special purpose hardware and computer instructions.

Although the embodiments described above mainly address assessing test coverage of software code that subsequently executes on a suitable processor, the methods and systems described herein can also be used for assessing test coverage of firmware code. The firmware code may be written in any suitable language, such as in C. In the context of the present patent application and in the claims, such code is also regarded as a sort of software code.

The references cited herein teach many principles that are applicable to the present invention. Therefore the full contents of these publications are incorporated by reference herein where appropriate for teachings of additional or alternative details, features and/or technical background.

It is to be understood that the invention is not limited in its application to the details set forth in the description contained herein or illustrated in the drawings. The invention is capable of other embodiments and of being practiced and carried out in various ways. Those skilled in the art will readily appreciate that various modifications and changes can be applied to the embodiments of the invention as hereinbefore described without departing from its scope, defined in and by the appended claims.

In one embodiment said filling tires step comprises filling said at least two tires concomitantly within three minutes.

In one embodiment said filling tires step comprises filling said at least two tires concomitantly within two minutes.

In one embodiment said method further comprises charging said user of said vehicle for said tire pressure monitoring and tire filling service.

In one embodiment said method further comprises providing compensation to a user of said vehicle for a low value of said fuel efficiency loss over said time period.

In one embodiment said compensation is at least one of: money, an account credit, at least one credit point, a club membership point, a prize, and a compensation related to a carbon credit due to said low value of said fuel efficiency loss.

In one embodiment said method further comprises providing a fine to a user of said vehicle for a high value of said fuel efficiency loss over said time period.

In one embodiment said method further comprises providing compensation to a service provider of said tire pressure monitoring and tire filling service for said low value of said fuel efficiency loss over said time period.

In one embodiment said compensation is at least one of: money, an account credit, at least one credit point, a club membership point, a prize, a compensation related to a carbon credit due to said low value of said fuel efficiency loss of said vehicle, and a compensation related to a carbon credit due to an average low value of fuel efficiency loss of a plurality of vehicles serviced by said service provider.

### REFERENCES

1. J. Pearce and J. Hanlon ENERGY POLICY 35(4) 2673-2677 2007 Energy Conservation From Systematic Tire Pressure Regulation.
2. Online publication TOYOTALK The relationship between tire pressure and fuel consumption. http://www.toyojapan.com/tires/pdf/TTT_19.pdf
3. R. Hickman and D. Bannister Paper at the 45th European Congress of the Regional Science Foundation Toward 15 MtC in the UK Transport Sector.
4. US DEPARTMENT OF TRANSPORTATION 2002 DOT HS809 454 Air pumps at US Gas stations: An Investigation into factors associated with Gauge accuracy.
5. Dr. W. Hennig. Ford Eco-Driving for Reducing CO2 and improving Fuel economy 2008, published online.
6. http://www.ecodrive.org/Additional-Tipps-and-Tricks.229.0.html
7. UNITED STATES ENVIRONMENTAL PROTECTION AGENCY EPA-420-F-09-013 APRIL 2009 Devices and Additives to Improve Fuel Economy and Reduce Pollution- Do they really work?
8. S. Jansuwan and S Narupiti 2005 Proceedings of the Eastern Asia Society for Transportation Studies 5:1367-1378. Assessment of area traffic control system in Bankok by the microscopic simulation model.
9.http://www.racfoundation.org/index.php?option=com_content&task=view&id=280 &Itemid=0
10. F. Shokri et al. European Journal of Scientific Research 32(2) 2009 p177-186. Best Route Based on Fuel Economy.

## Claims

1. A computer-controlled tire pressure control system for reducing fuel consumption of a vehicle over a time period, the system comprising:
a) an air pump system comprising an air pump unit adapted to fill at least two tires concomitantly of said vehicle;
b) at least one double ended conduit in fluid connection with said air pump unit;
c) a frame for supporting the at least one double ended lead conduit around the vehicle; and
d) a computer in communication with said air pump unit and said vehicle for providing a user of said vehicle with real-time tire data of said vehicle over said time period.

2. A computer-controlled tire pressure control system according to claim 1, further comprising a load cell disposed under said frame.

3. A computer-controlled tire pressure control system according to claim 2, wherein said load cell is adapted to provide real-time data relating to a weight of said vehicle to define said set pressure.

4. A computer-controlled tire pressure control system according to claim 1, wherein said air pump unit comprises a display for displaying real time parameters of said at least two tires concomitantly.

5. A computer-controlled tire pressure control system according to claim 4, wherein said real time parameters are selected from the group consisting of a pressure parameter, a temperature parameter, a tread parameter and combinations thereof.

6. A computer-controlled tire pressure control system according to claim 1, wherein said at least one double-ended conduit comprises a tire connection device at each end.

7. A computer-controlled tire pressure control system according to claim 6, wherein said at least one double-ended conduit comprises a connector conduit for equalizing pressure in said at least two tires.

8. A computer-controlled tire pressure control system according to claim 7, wherein said connector conduit comprises at least one remotely-operable valve.

9. A computer-controlled tire pressure control system according to claim 8, wherein said at least one remotely-operable valve comprises at least one one-way valve.

10. A computer-controlled tire pressure control system according to claim 6, wherein said at least one double-ended conduit comprises two double-ended conduits.

11. A computer-controlled tire pressure control system according to claim 1, further comprising a vehicle identifier apparatus comprising at least one of an optical eye and a bar-code reader.

12. A computer-controlled tire pressure control system according to claim 11, wherein said vehicle identifier apparatus is adapted to determine said set pressure in accordance with at least one of: a vehicle type, a vehicle real-time load; a tire temperature and vehicle historical data.

13. A method for reducing fuel consumption of a vehicle, the method comprising:
a. providing a tire pressure monitoring and tire filling service to a vehicle over a time period;
b. sending at least one reminder to a user of said vehicle after a predetermined time interval in said time period; and
c. filling tires of said vehicle responsive to said tire pressure monitoring after said predetermined time interval thereby reducing a fuel efficiency loss of said vehicle.

14. A method according to claim 13, wherein said fuel is selected from the group consisting of: fossil fuel, biodiesel, electric battery power, hydrogen fuel, solar energy, wind energy, hybrid fuels and combinations thereof.

15. A method according to claim 14, wherein said provision step and said filling tires step are performed at least, in part, by the computer-controlled air pump system according to claim 1.
